# EUROPEAN PATENT APPLICATION

(11) **EP 0 669 456 A1**
(43) Date of publication of application: **30.08.1995**
(21) Application number: 94103851.5
(22) Date of filing: 12.03.1994
(51) Int. Cl.: F02B 51/06, F02M 27/06

(54) **Infrared ray resonance absorption apparatus for hydrocarbon**

(30) Priority: 25.02.1994 JP 28598/94
(71) Applicant: Fujimoto, Shigenobu, Kuga-gun, Yamaguchi 740-12 (JP); Bozono, Hiroyuki, Hiroshima-shi, Hiroshima 730 (JP); Nakatani, Yutaka, Hiroshima-shi, Hiroshima 736 (JP); Mizuno, Hiroshi, Kumage-gun, Yamaguchi 745-15 (JP)
(72) Inventor: Fujimoto, Shigenobu, Kuga-gun, Yamaguchi 740-12 (JP); Bozono, Hiroyuki, Hiroshima-shi, Hiroshima 730 (JP); Nakatani, Yutaka, Hiroshima-shi, Hiroshima 736 (JP); Mizuno, Hiroshi, Kumage-gun, Yamaguchi 745-15 (JP)
(74) Representative: Selting, Günther, Dipl.-Ing.

(57) **Abstract**

An infrared ray resonance absorption apparatus for hydrocarbon fuel in which a pipe through which hydrocarbon fuel is to be passed is made of, for example, ceramics or carbon, and a heater is disposed on the outer periphery of the pipe. The pipe is heated by the heater, and the heating temperature is controlled within the range of 93 to 206 °C, whereby the pipe is caused to radiate infrared rays of a wavelength of 6 to 8 µm.

## Description

### BACKGROUND OF THE INVENTION

### Field of the Invention

The invention relates to an infrared ray resonance absorption apparatus which is useful in combustion of hydrocarbon fuel and in which the exhaust gas is reduced and the fuel consumption is improved.

### Description of Related Art

When hydrocarbon fuel absorbs energy, molecules of the fuel are excited to elevate the energy level. It is known in the organic electron theory that this elevated energy level causes molecules to spin or vibrate to be cleaved. The inventors disclosed in Japanese Patent Application Laid-Open No.61-95092 (1986) a technique in which hydrocarbon fuel is caused to resonance-absorb electromagnetic or magnetic energy, thereby improving the combustion characteristics of the fuel. In this method, the latent energy of hydrocarbon fuel which is lost as heat of self-dissociation is substituted by electromagnetic or magnetic energy given by resonance abosorbing, so that it is capable of improving the combustion characteristics. A specific method of giving such energy is disclosed in Japanese Patent Application Laid-Open No.5-337334 (1993).

However, a practical infrared ray resonance absorption apparatus which executes this method and in which the dissociation state of molecules of hydrocarbon fuel can be continued for a prolonged period has not yet been developed.

### SUMMARY OF THE INVENTION

The present invention has been conducted in order to solve the above-mentioned problem. It is a primary object of the invention to provide an infrared ray resonance absorption apparatus for hydrocarbon fuel in which hydrocarbon fuel is passed through a pipe made of, for example, ceramics or carbon and a heater is disposed on the outer periphery of the pipe, thereby enabling infrared rays of a wavelength of 6 to 8 µm to be resonance-absorbed by the hydrocarbon fuel.

The infrared ray resonance absorption apparatus for hydrocarbon fuel according to the invention is characterized in that the apparatus comprises a pipe which is made of ceramics or carbon and through which hydrocarbon fuel is to be passed, and a heater disposed on the outer periphery of the pipe. The pipe is heated by the heater to a predetermined temperature (93 to 206 _{°} C), so that the pipe radiates infrared rays having a wavelength of 6 to 8 /1.m. When hydrocarbon fuel is passed through the pipe, the hydrocarbon fuel resonance- absorbs the infrared rays having a wavelength of 6 to 8 /1.m. This causes molecules of the hydrocarbon fuel to elevate their energy levels to enter a so-called excited state, and the molecules are divided into a plurality of portions.

In the apparatus of the invention, a plurality of the pipes may be disposed in accordance with the quantity of hydrocarbon fuel which is to be passed through the pipes. According to this constitution, it is capable of passing hydrocarbon fuel at a speed which is optimum for the hydrocarbon fuel to resonance-absorb infrared rays.

In the apparatus of the invention, the pipe is supported by a heat resistant rubber holder. This configuration can reduce the thermal influence on an apparatus on which the apparatus of the invention is to be mounted, and also the vibration transmitted from the apparatus on which the apparatus of the invention is to be mounted.

In the prior art, the dissociation into atomics is conducted by energy of self-dissociation. In contrast, according to the invention, such dissociation is conducted by resonance-absorbed energy. When hydrocarbon fuel in the dissociation state is subjected to combustion, therefore, energy, which is lost as energy of self-dissociation in combustion in the prior art, can be taken out as energy of combustion.

The above and further objects and features of the invention will more fully be apparent from the following detailed description with accompanying drawings.

### BRIEF DESCRIPTION OF THE DRAWINGS

FIG. 1 is a partially cutaway perspective view showing an infrared ray resonance absorption apparatus for hydrocarbon fuel according to the invention;
FIG. 2 is a side view, with the upper portion cut open, showing the infrared ray resonance absorption apparatus for hydrocarbon fuel shown in FIG. 1;
FIG. 3 is a graph showing the relationship between the surface temperature of pipes and the peak wavelength of infrared rays;
FIG. 4 is a diagram showing the infrared ray resonance absorption wavelength of isooctane;
FIG. 5 is a diagram showing the infrared ray resonance absorption wavelength of normal heptane;
FIG. 6 is a diagram showing the infrared ray resonance absorption wavelength of normal dodecane; and
FIG. 7 is a schematic section view showing the configuration of a combustion equipment for hydrocarbon fuel which comprises a further dissociation apparatus in the front stage of the apparatus of the invention.

### DESCRIPTION OF THE PREFERRED EMBODIMENTS

Hereinafter, the invention will be described in detail with reference to the drawings showing its embodiments.

### Embodiment 1.

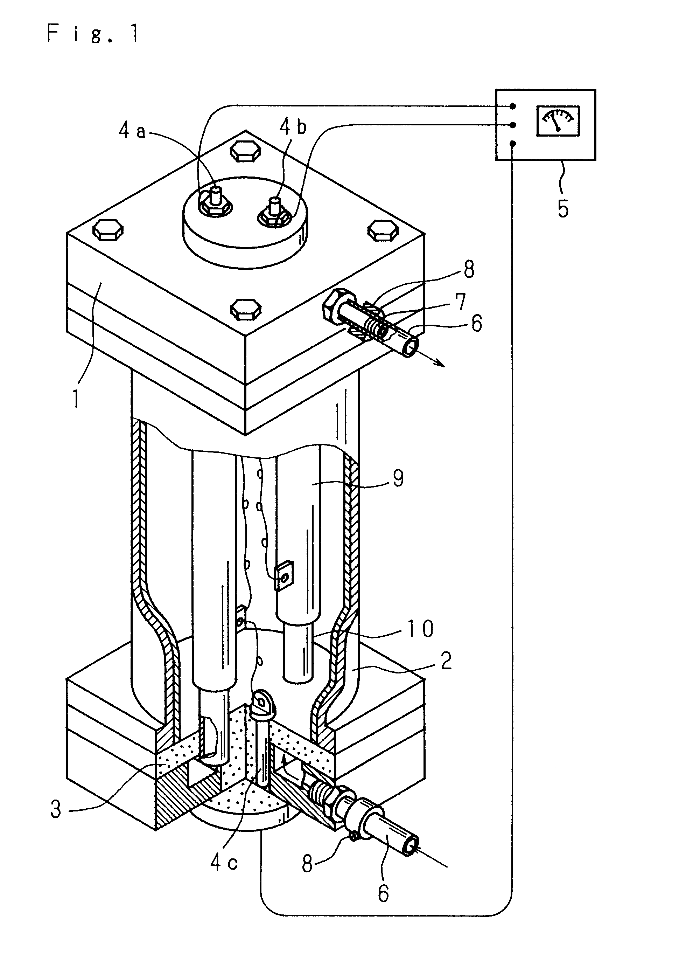

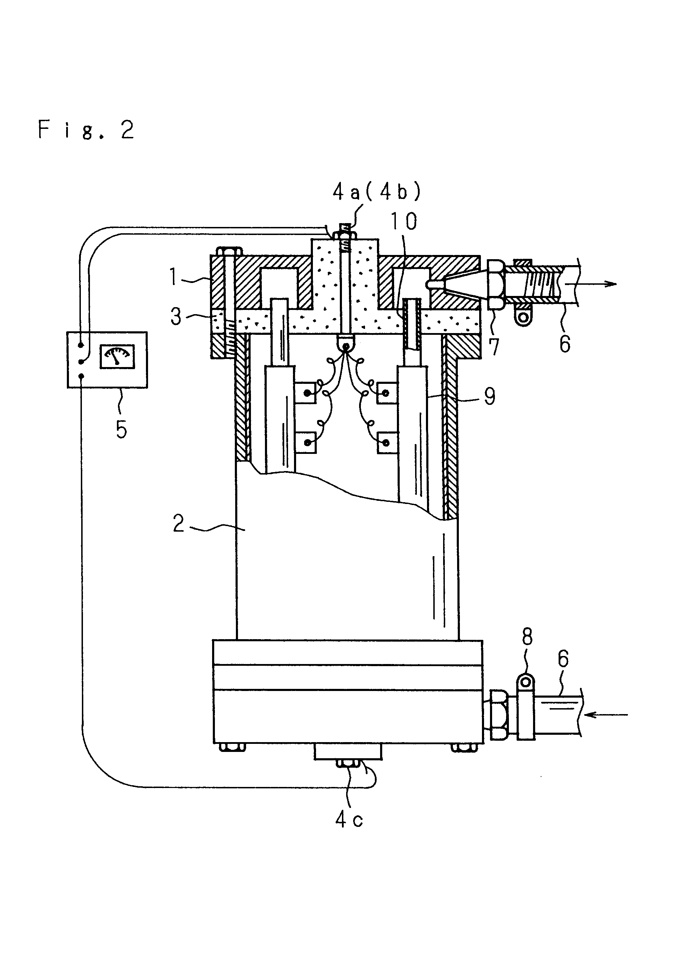

FIG. 1 is a partially cutaway perspective view showing an infrared ray resonance absorption apparatus for hydrocarbon fuel according to the invention, and FIG. 2 is a side view, with the upper portion cut open. In the figures, numeral 2 designates a cylindrical pipe spacer which is made of a material such as Teflon (fluorocarbon polymers), metal, or synthetic resin and which has a square flange at each end. The inner wall of the pipe spacer 2 is lined with a heat insulating material. A distribution pressing metal fittings 1 having a distribution passage therein is bolted to each of the flanges of the pipe spacer 2, through a heat resistant rubber holder 3. This configuration allows the pipe spacer 2 to be supported in a state free from vibration and hermetically sealed. Two pipes 10 which are made of ceramics (for example, zirconia zircon) and respectively sheathed by an electric heater 9 are disposed inside the pipe spacer 2. The pipes 10 penetrate through the heat resistant rubber holders 3 and are vertically communicated with annular distribution passages. Although the pipes 10 are made of ceramics in the embodiment, the pipes may be made of carbon.

Hose connectors 7 to which fuel pipes 6 are connected with by hose bands 8 are communicated with the distribution passages, respectively. The heat resistant rubber holders 3 penetrate through a center portion of the distribution pressing metal fittings 1 so as to be exposed to the outside. Sealing terminals 4a and 4b penetrate through a center portion of the one heat resistant rubber holder 3, and a sealing terminal 4c penetrates through a center portion of the other heat resistant rubber holder 3. The electric heater 9 have a configuration in which a heating coil and a coil for a temperature sensor are wound on the outer periphery of the respective pipe 10 in such a manner that they are not shortcircuited. The heating coils wound on the pipes 10 are connected to a power source 5 via the sealing terminals 4a and 4b, respectively. The power source 5 has a temperature control circuit which controls the heating temperatures of the heaters on the basis of a temperature detected by a temperature sensor. The coils for the temperature sensor are connected to the temperature control circuit of the power source 5 via the sealing terminal 4c. In order that the pipes 10 radiate infrared rays of a wavelength of 6 to 8 µm, the temperature control circuit conducts a control so that the pipes 10 are maintained at an optimum temperature in the range of 93 to 206 _{°} C.

Alternatively, two additional sealing terminals may be disposed and each of the electric heaters 9 may consist of coils for base heater, a control heater, and the temperature sensor. In this alternative, the base heater always generates a fixed quantity of heat, and the quantity of heat generated by the control heater is controlled by the temperature control circuit.

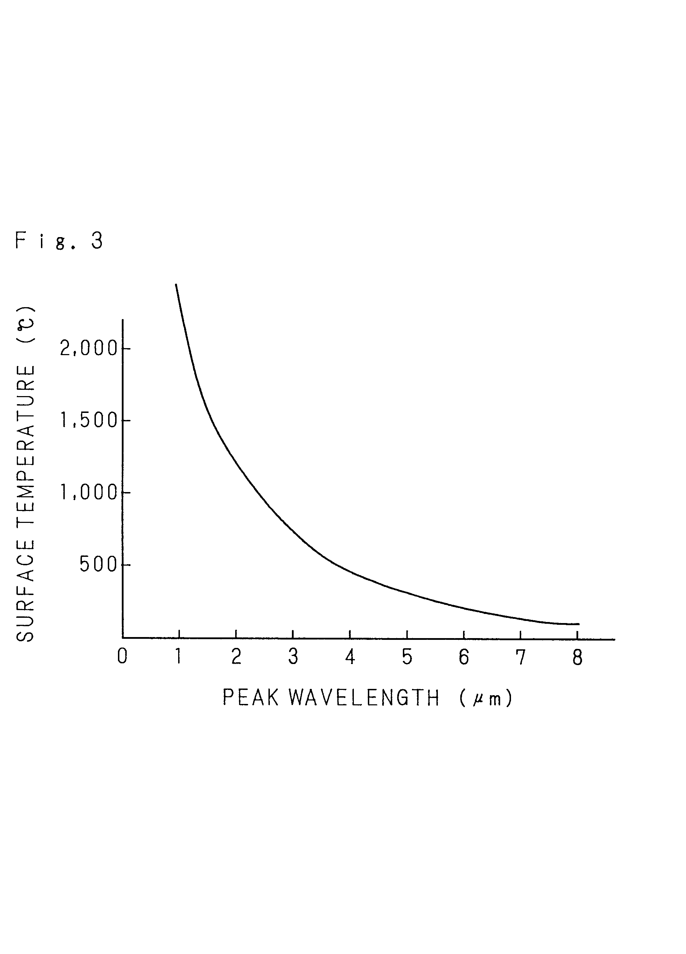

FIG. 3 is a graph showing the relationship between the surface temperature of the pipes and the peak wavelength of generated infrared rays. Infrared rays having a wavelength of 6 to 8 /1.m are in the region in the side of the far infrared region, and are electromagnetic waves generated from ceramics other than metallic ones, or carbon which is heated to 93 to 206 _{°} C. Therefore, desired infrared rays can be obtained by making the electric heaters 9 of ceramics or carbon and controlling the heating temperature. Depending on the material constituting the pipes 10, the emissivity of the pipes 10 varies, and therefore the heat response characteristic varies. When the gain of the response characteristic of zirconia zircon is assumed to be 1, that of carbon is 1/3 and that of alumina is 3.

The inner diameter of each pipe 10 is determined in accordance with the flow velocity of hydrocarbon fuel flowing through it. In the invention, it was confirmed that, when the flow velocity is 1 m/sec. or less, hydrocarbon fuel resonance-absorbs infrared rays of 6 to 8 /1.m. Infrared rays are resonance-absorbed for 10-⁸ to 10-⁶ sec. When the flow velocity is 1 m/sec. or less, therefore, the sectional area of the fluid can be neglected. The length of each pipe 10 which is 50 mm or longer is sufficient for resonance absorption. The thickness of each pipe 10 is determined to be a value by which a mechanical strength is attained for preventing the pipe from being damaged by vibration when the apparatus is mounted on, for example, an automobile. When the apparatus is mounted on a 25 to 40-ton trailer having a large engine, for example, the pipes 10 may have a thickness of 1 to 2 mm and an inner diameter of 8 mm. When the apparatus is mounted on a medium or 5,000-ton class ship having a low-speed diesel engine, the pipes 10 may have a thickness of 2 to 4 mm and an inner diameter of 12 to 20 mm.

In FIGs. 1 and 2, hydrocarbon fuel is supplied to the apparatus via the lower fuel pipe 6 and discharged therefrom via the upper fuel pipe 6.

In the thus configured infrared ray resonance absorption apparatus for hydrocarbon fuel, when hydrocarbon fuel is supplied via the lower fuel pipe 6 and the electric heaters 9 are energized, the hydrocarbon fuel is introduced into the pipes 10 via the distribution passage of the distribution pressing metal fitting 1, and then resonanceabsorbs infrared rays radiated from the pipes 10 during the flow through the pipes 10. Thereafter, the hydrocarbon fuel in which molecules have been changed to be in the dissociation state by this resonance absorption is discharged via the upper fuel pipe 6.

In the invention, hydrocarbon fuel is caused to resonance-absorb infrared energy in a heat insulated and sealed space. Even when the pipes 10 made of ceramics or carbon are damaged and hydrocarbon fuel leaks into the pipe spacer 2, therefore, there is substantially no possibility that hydrocarbon fuel leaks out to the outside. Since hydrocarbon fuel does not contact with the air, the dangerousness of catching fire is reduced to an extremely low level.

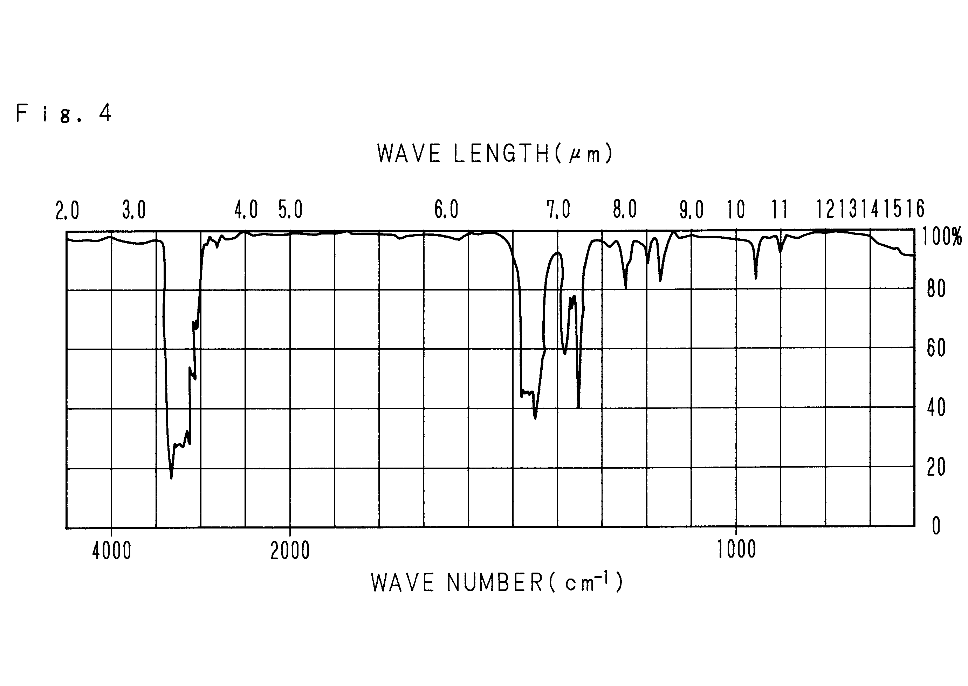

Next, the principle of the process in which hydrocarbon fuel resonance-absorbs infrared rays in the pipes 10 will be described. FIG. 4 is a diagram showing the infrared ray resonance absorption wavelength of isooctane (2-2-4-trimethylpentane) which is the principal component of gasoline and the decisive factor to the octane number. Isooctane has a structural formula of CH₃-C₃H₆-CH₂-C₂H4.-CH₃. As shown in FIG. 4, isooctane is resonant with infrared rays of a wavelength of 3 to 4 _{/1}.m and that of 6 to 8 µm, and absorbs the energy of the infrared rays in the level of molecules.

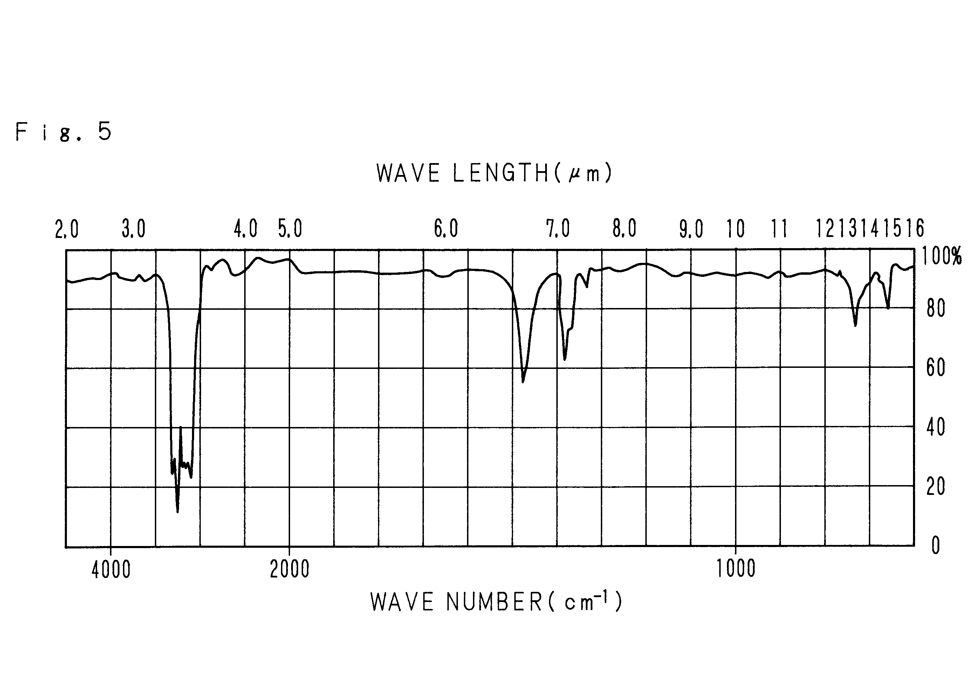

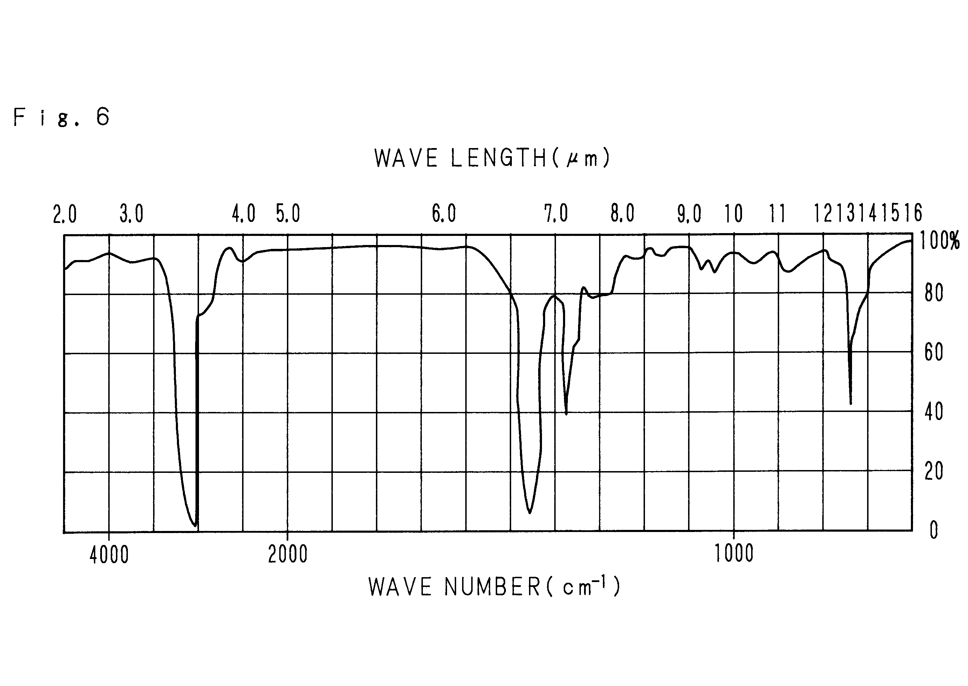

FIGs. 5 and 6 are diagrams showing the infrared ray resonance absorption wavelengths of normal heptane and normal dodecane which are contained in kerosene and light oil. Normal heptane has a structural formula of CH₃-[CH_{2]5}-CH₃, and normal dodecane a structural formula of CH₃-[CH_{2]}io-CH₃. In the similar manner as isooctane, normal heptane and normal dodecane are resonant with infrared rays of a wavelength of 3 to 4 _{/1}.m and that of 6 to 8 µm, and absorb the energy of the infrared rays. In most of hydrocarbons, the wavelength bands of resonance absorption are the same. When absorbing the light (the infrared rays), hydrocarbon molecules are excited to elevate the energy level, with the result that they vibrate to be divided.

Hydrocarbon fuel was subjected to combustion in a combustion equipment provided with the apparatus of the invention, and also in that not provided with the apparatus of the invention. As a result, the combustion equipment provided with the apparatus of the invention exhibited the fuel consumption which is superior by 20 to 30 %.

### Embodiment 2.

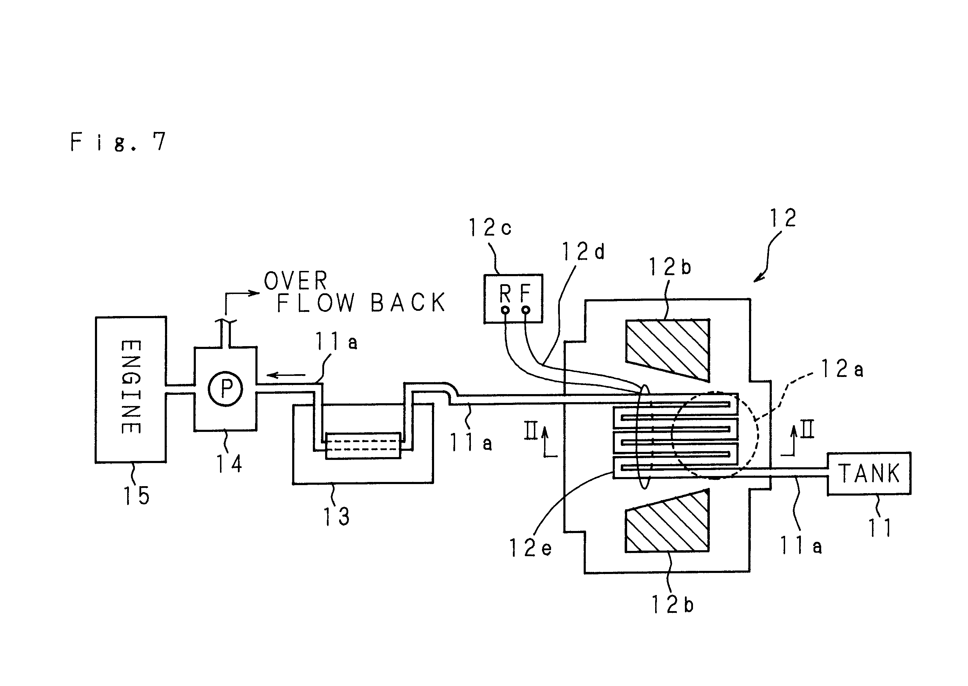

FIG. 7 is a schematic section view showing the configuration of a combustion equipment for hydrocarbon fuel which comprises a further dissociation apparatus in the front stage of the apparatus of the invention. In the figure, numeral 11 designates a tank for storing hydrocarbon fuel. The tank 11 is connected via a conduit 11 a to a primary and secondary dissociation apparatus 12 for conducting primary and secondary dissociation which will be described later. In the primary and secondary dissociation apparatus 12 which is made of a magnetically permeable material, permanent magnets 12b having a magnetic flux density of 20,000 G are disposed so as to conduct a magnetic sweep, and a passage 12e for hydrocarbon fuel meanders in such a manner that it reciprocates several times in a magnetic field produced by the permanent magnets 12b. The conduit 11 a is communicated with the passage 12e so that hydrocarbon fuel supplied from the tank 11 is introduced into the passage 12e. An infrared lamp 12a emitting infrared rays of a wavelength of 3 to 4 µm is disposed at a location which is below the meandering passage 12e and in the side of the tank 11. A conductor wire 12d which is connected to a high-frequency oscillator (85 MHz) 12c is wound on the middle portion of the outer periphery of the meandering passage 12e.

The primary and secondary dissociation apparatus 12 is connected via the conduit 11 a to the apparatus of the invention (tertiary dissociation apparatus) 13 for conducting tertiary dissociation, so that hydrocarbon fuel which has undergone primary and secondary dissociation is sent to the tertiary dissociation apparatus 13. The tertiary dissociation apparatus 13 has the same configuration as that shown in FIGs. 1 and 2, and therefore its description is omitted. The tertiary dissociation apparatus 13 is connected via the conduit 11 a to an injection pump 14 and an engine 15 of the combustion system, whereby hydrocarbon fuel supplied from the tertiary dissociation apparatus 13 to the injection pump 14 is highly compressed and then supplied to the engine 15.

According to the above configuration, in the primary and secondary dissociation apparatus 12, hydrocarbon fuel supplied from the tank 11 resonance-absorbs infrared rays of a wavelength of 3 to 4 µm (in the side of near infrared rays) and emitted from the infrared lamp 12a, so that the energy levels of molecules are excited from the ground state. As a result, the bonds of radicals are broken so that each molecule is divided into free radicals in the unpaired electron state. This process is called primary dissociation.

When isooctane molecules resonance-absorbs infrared rays of 3 to 4 µm, the division energy acts between radicals and vibration occurs. At this time, owing to Pascal's additive property, the absorption energy acts in a split manner so that isooctane molecules in the solution state are divided into active free radicals each having unpaired electrons, namely, five methyl radicals (-), one methylene radical (-)(-), and one methine radical (-). Such primary dissociation can be executed by directly irradiating flowing fuel by the infrared lamp 12a which emits light of a wavelength of 3 to 4 _{/1}.m.

Then, nuclear magnetic resonance is caused by the static magnetic field produced by the permanent magnets 12b in the primary and secondary dissociation apparatus 12, and the high-frequency electromagnetic wave which is perpendicular to the static magnetic field, and hydrogen is excited so that molecules dissociate into H and C in the level of atoms. This process is called secondary dissociation. The hydrocarbon fuel which has undergone secondary dissociation is further sent to the tertiary dissociation apparatus 13. In the tertiary dissociation apparatus 13, the fuel resonance-absorbs infrared rays of 6 to 8 µm, and attains the state where the secondary dissociation state can be maintained for a long period. This process is called tertiary dissociation.

There is no other way for hydrocarbon fuel which is in the secondary dissociation state or the state where molecules have been divided to dissociate in the level of atoms, than to conduct one of the following processes, that the molecules emit phosphorescence and return to the ground state, that the molecules combine with another substance to consume bond energy and return to the ground level, and that the molecules diffuse thermal energy to the solution and return to the ground state. In this case, the fuel hardly combines with another substance. Since the solution is homologous, the fuel has a high possibility of diffusing thermal energy to the solution to return to the ground state. It is difficult to suppress this phenomenon. Consequently, the excited state (secondary dissociation state) can be maintained by setting the fuel to a state where the proportion of the molecules emitting phosphorescence and returning to the ground state can be decreased to a level as low as possible. In order to conduct this method, the fuel is again subjected to the resonance absorption of light energy, and the period during which the secondary dissociation state is maintained is prolonged by the action equivalent to the optical pumping.

As described above, hydrocarbon fuel resonance-absorbs infrared rays of a wavelength of 3 to 4 _{/1}.m and that of 6 to 8 /1.m. Since infrared rays of 6 to 8 µm are absorbed with the primary object of energy excitation (i.e., vibrational energy), such infrared rays conduct the role of decelerating the return to the ground state in the solution which is in the secondary dissociation state. This phenomenon is equivalent to the optical pumping phenomenon which is observed in the generation of a laser beam, and has a function of continuing the division and dissociation state. Depending on the situations, the continuing period is varied largely. For example, in a solution in which the excited state is continued only for several minutes when first and secondary dissociation only is conducted, the period of the excited state can be prolonged to about 72 hours by executing tertiary dissociation. The execution of such tertiary dissociation enables hydrocarbon fuel to be subjected to combustion under the state where energy of self-dissociation is not entirely consumed. The detail of primary, secondary and tertiary dissociation is disclosed in Japanese Patent Application Laid-Open No. 5-337334 (1993) by the inventors.

When hydrocarbon fuel was subjected to combustion in the equipment shown in FIG. 7, the fuel consumption was improved by 80 to 200 % as compared with that obtained in combustion in a conventional engine. In this case, when the tertiary dissociation apparatus 13 is disposed at a location which is as close as possible to the primary and secondary dissociation apparatus 12, the effect is enhanced. When the primary and secondary, and tertiary dissociation apparatuses are integrally constructed, a further effect can be expected.

Although, two pipes 10 are attached to the heat resistant rubber holders 3, the number of the pipes can be adequately selected in accordance with the required flow rate of hydrocarbon fuel.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within metes and bounds of the claims, or equivalence of such metes and bounds thereof are therefore intended to be embraced by the claims.

## Claims

1. An apparatus for making hydrocarbon fuel re- sonanceabsorb infrared rays, said hydrocarbon fuel to be subjected to combustion in a combustion system, comprising:
means to pass said hydrocarbon fuel therethrough; and
a heater disposed on an outer periphery of said means to pass hydrocarbon fuel.

2. An infrared ray resonance absorption apparatus for hydrocarbon fuel according to claim 1, wherein said means to pass hydrocarbon fuel are made of ceramics.

3. An infrared ray resonance absorption apparatus for hydrocarbon fuel according to claim 1, wherein said means to pass hydrocarbon fuel are made of carbon.

4. An infrared ray resonance absorption apparatus for hydrocarbon fuel according to claim 1, further comprising control means for controlling a heating temperature of said heater so that a temperature of said means to pass hydrocarbon fuel is within a range of 93 to 206 _{°} C.

5. An infrared ray resonance absorption apparatus for hydrocarbon fuel according to claim 1, wherein said means to pass hydrocarbon fuel are supported by a heat resistant rubber holder.

6. An infrared ray resonance absorption apparatus for hydrocarbon fuel according to claim 1, wherein said means to pass hydrocarbon fuel include a pipe.

7. An infrared ray resonance absorption apparatus for hydrocarbon fuel according to claim 1, wherein said means to pass hydrocarbon fuel include pipes.
